# EUROPEAN PATENT APPLICATION

(11) **EP 1 290 954 A1**
(43) Date of publication of application: **12.03.2003**
(21) Application number: 01830569.8
(22) Date of filing: 07.09.2001
(51) Int. Cl.: A23L 3/16, A23C 19/097

(54) **Process and equipment for sterilizing the surface of dairy products**

(71) Applicant: S.p.A. Egidio Galbani, 20066 Melzo (IT)
(72) Inventor: Salvi, Filippo, c/o S.p.A. Egidio Galbani, 20066 Melzo (IT); Ghisu, Giuseppe, c/o S.p.A. Egidio Galbani, 20066 Melzo (IT)
(74) Representative: Long, Giorgio

(57) **Abstract**

The present invention relates to a process for sterilizing dairy products, particularly cheeses with rinds.

In particular, the present invention relates to a process for the surface sterilization of dairy products, the said process comprising a stage of hot sterilization of the surface or part of the surface of the said dairy product, and equipment for its application.

## Description

The present invention relates to a process for sterilizing dairy products, particularly cheeses with rinds.

Modern food production requires the constant control of hygiene at each stage of processing of the food, and in its packaging and storage. This requirement is particularly marked in the field of dairy products, particularly in the case of cheeses with rinds, which frequently undergo traditional processes such as maturing in cellars or caves, during which the cheese develops its distinctive organoleptic characteristics as a result of the action of specific micro-organisms.

However, beside the beneficial action of useful moulds it is possible for the cheese's rind to be contaminated by undesired micro-organisms during the maturing process. For example, it is known that washed rind and bloomy rind cheeses can carry on their surfaces bacteria such as listeria monocytogenes, which are dangerous to human health if ingested. The same problem is frequently encountered in cheeses subjected to medium- and long-term storage.

Although the industrial production of dairy products makes use of all the appropriate hygienic and sanitary measures, surface contamination of cheeses by harmful bacteria cannot be entirely prevented, partly because of the long period for which the cheese remains in the maturing environment before it is packaged.

The problem to which the present invention relates is therefore that of providing consumers with dairy products whose surfaces or rinds are free of contamination by bacteria or other harmful micro-organisms.

This problem has been resolved by a method of surface sterilization of dairy products and by the corresponding equipment as outlined in the attached claims.

In the following description, the term "cheese" also comprises slices or pieces of cheese of any type and size, including those obtained by cutting or breaking up cheeses, for which sterilization of all or part of the surface is desirable.

Further characteristics and advantages of the surface sterilization process and equipment according to the present invention will be made clearer by the description of two examples of embodiment, provided below for guidance and without restrictive intent, with reference to the following figures:
Figure 1 shows a schematic side view of the surface sterilization equipment according to the present invention;
Figure 2 shows a schematic view, in plan and in partial section, of the equipment of Figure 1;
Figure 3 shows a schematic side view, in partial section, of a second embodiment of the surface sterilization equipment according to the present invention;
Figure 4 shows a schematic view, in plan and in partial section, of the equipment of Figure 3;
Figure 5 shows a schematic view of the detail of the area for washing the cheese support elements;
Figure 6 shows a schematic view of the detail of the conveyor belt washing area.

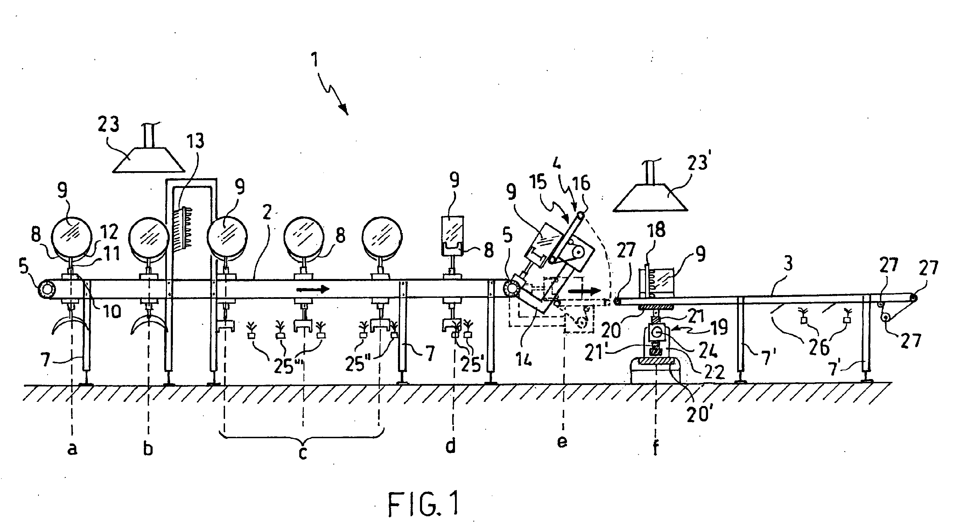

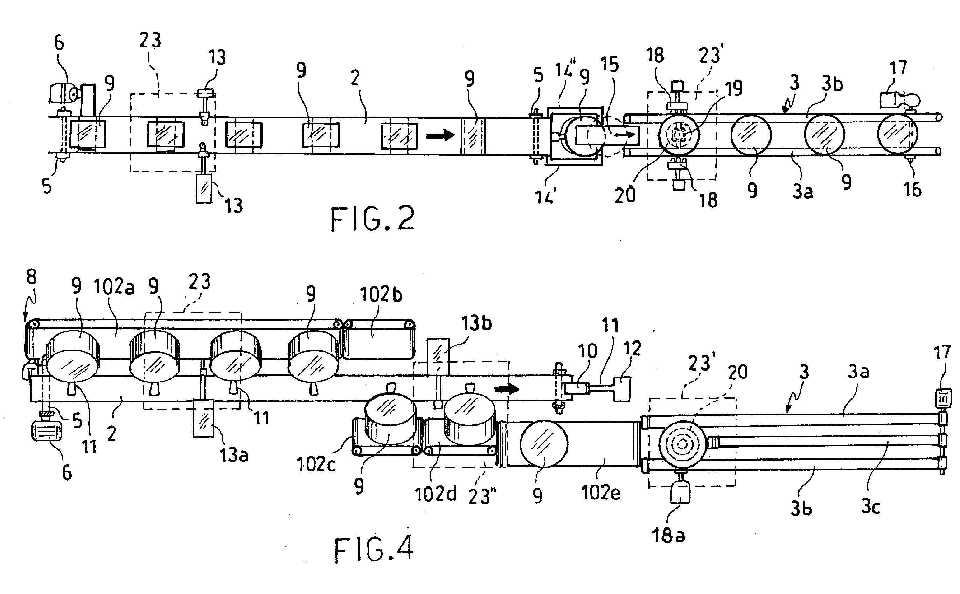

With reference to Figures 1 and 2, the surface sterilization equipment for dairy products, indicated as a whole by the number 1, comprises means of moving the dairy products, these means comprising a first conveyor 2, a second conveyor 3 and means 4 for transferring the dairy products from the said first conveyor to the said second conveyor.

The first conveyor 2 is of the conventional type, comprising a system of sprockets 5 engaged with a chain which provides the movement of the conveyor. Suitable drive means 6 are connected by means of a shaft to the sprocket 5 located at one end of the conveyor. Suitable support means 7, which are legs in this example, keep the conveyor 2 raised above the ground.

The conveyor 2 comprises a plurality of support means 8 for cheeses 9, these latter being in the example of cylindrical shape. These support means 8 are movably fixed in a known way to the conveyor 2 and are positioned at regular intervals along it. The support means 8 comprise a base 10, a stem 11 rotatably engaged with the said base, and a support element 12 fixed to the said stem. The support element 12 has a shape and size such that it can be adapted to the shape and size of the cheese to be sterilized and therefore is generally interchangeable, so that the equipment can be adapted to meet various requirements which may arise. The stem 11 is associated with independent drive means (not shown) which rotate the support element 12, and consequently the cheese supported on it, through 90°, so that they assume a position in which the base of the cheese is orthogonal to the direction of movement of the conveyor 2, as shown by the final cheese 9 on the conveyor 2 of Figure 1.

The support element 12, generally in the shape of a saddle, preferably has a width smaller than that of the side of the cheese 9.

Hot sterilization means 13 are located in an intermediate position along the conveyor 2. The said hot sterilization means preferably consist of linear burners of a known type, formed by a plurality of gas jets located on both sides of the conveyor 2, in such a way that they face each other and the bases 9 and cover the whole area of the bases. These hot sterilization means are associated with means of adjusting their distance from the surface of the cheese to be treated. In practice, the hot sterilization means 13 are located slidably on a slider (not shown in the figures) with an axis of sliding perpendicular to the plane in which the bases of the cheeses lie. It is thus possible to position the flames of the burners at a suitable distance from the surfaces of the cheese 9, this distance varying according to the shape, dimensions and type of the cheese, and, for each type of cheese, according to the irregularities of shape and size between one cheese and the next. The distance of the hot sterilization means 13 from the surface of the cheese can also be regulated automatically by means of suitable sensors, preferably laser sensors, which determine the dimensions of the cheese, or the deviation of the thickness of the cheese from a pre-set standard, and send the signal to a control unit which sends an operating command to an actuator connected to the said hot sterilization means 13, thus moving them along the slider until they are positioned at the predetermined distance from the surface of the cheese.

The end of the conveyor 2 where the cheeses are discharged is associated with means 4 for transferring the cheeses from the first conveyor 2 to the second conveyor 3. These means 4 of transferring the cheeses consist, in the example, of a swinging arm 14 having an independent drive which enables it to swing in the vertical plane lying on the directing line of advance of the conveyor 2. The swinging arm 14 consists of two L-shaped arms 14' and 14'' pivoted on one end of the first conveyor 2 and placed at a distance from each other such that they do not interfere with the support element 12 of the cheeses 9 when the cheeses, following the path of the conveyor 2, pass from the upper to the lower part of the conveyor. The swinging arm 14 comprises, at the opposite end from the pivot point, a sliding plate 15 for receiving the cheese in transit from the first to the second conveyor. The sliding plate 15 consists of a conveyor belt 16 whose width is less than the diameter of the cheese 9 and which comprises a system of belts and transmission elements and an independent drive. The function of the conveyor belt 16 is to move the cheese 9 from the receiving position, in which the cheese is only partially supported by the sliding plate 15, as shown in Figure 1, to the position in which the cheese is supplied to the second conveyor 3.

The second conveyor 3 comprises a pair of parallel conveyor belts 3a and 3b, spaced apart by a distance which is less than the diameter of the cheese 9 but is greater than the width of the sliding plate 15. The conveyor belts 3a and 3b are of a conventional type and comprise a system of sprockets 27 engaged with a chain which moves the belts. Suitable drive means 17 are connected by means of a shaft to a transmission element of the sprocket 27 located at one end of the conveyor. Suitable support means 7', which are legs in this example, keep the conveyor 3 raised above the ground.

The first and second conveyors 2 and 3 can be at the same level or, as shown in Figure 1, can be on levels which are slightly different from each other if, for reasons of construction, the latter configuration proves to be more convenient.

The second conveyor 3 is positioned in such a way that the supply end of the sliding plate 15 terminates between the two belts 3a and 3b, as shown clearly in Figure 2. Thus the cheese 9 leaving the sliding plate 15 is placed in a position such that it can engage with the conveyor 3.

A station for the hot sterilization of the sides of the cheeses 9 is positioned immediately down-line from the point where the cheeses 9 are picked up by the conveyor 3. This station comprises means 18 for hot sterilizing the cheese 9 and means 19 for handling it.

The hot sterilization means are completely identical to the means 13 described above for sterilizing the bases of the cheeses. They therefore comprise linear gas burners which are located on one side, or, as shown in Figure 2, on both sides of the conveyor 3, and are slidable on suitable sliders transversely with respect to the direction of advance of the belt. In this case also, the optimal distance of the flame from the surface of the side of the cheese can be automatically regulated by means of sensors, preferably laser sensors, which determine the radial dimensions of the cheese or the deviation of these dimensions from a pre-set standard, and send the signal to the control unit which sends an operating command to an actuator connected to the said hot sterilization means 18, thus moving them along the slider until they reach the predetermined distance from the surface of the side of the cheese.

The means 19 of handling the cheese 9 comprise a rotating plate 20 supported by a jack 21. An independent actuator 22 raises the jack, and consequently the plate 20, in a vertical direction, and a second actuator rotates the plate 20 in a predetermined direction. In a diametrically opposite position there is a second rotating plate 20' connected to a jack 21' and operating in a completely identical way to the first plate. The two rotating plates 20 and 20' are located along the same shaft and are swung about a common pivot point 24 by means of a suitable actuator.

As shown in Figure 2, the plate 20 has a diameter which is less than the distance between the two conveyor belts 3a and 3b, so that, when it is raised by the jack 21, there is no interference between the rotating plate 20 and the belts.

Above the hot sterilization areas of both the first and the second conveyor 2 and 3, there are hoods 23 and 23', preferably suction hoods, which remove the combustion fumes and gases generated by the burners.

Means of washing the cheese support elements 12 and means of washing the belts 3a and 3b are provided in the area beneath the two conveyors 2 and 3.

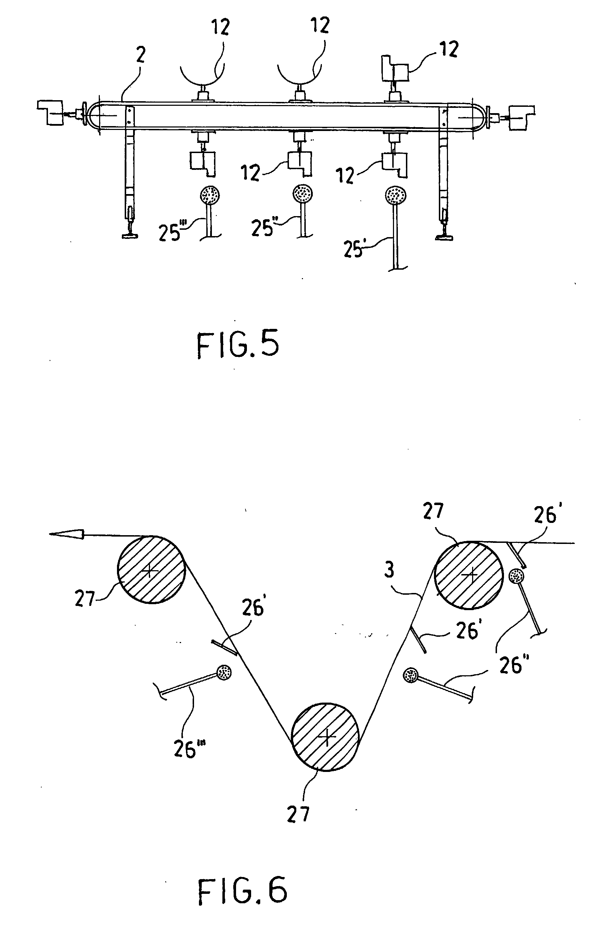

The means of washing the cheese support elements 12, shown schematically in Figure 5, comprise a first group of one or more nozzles 25' for spraying an aqueous solution of a degreasing detergent, a second group of one or more nozzles 25'' for spraying an aqueous solution of a disinfectant (generally sodium hypochlorite), and finally air drying means 25"'.

The means of washing the conveyor belts 3a and 3b, shown schematically in Figure 6, comprise one or more scrapers 26' which remove any large residues of cheese rind from the surface of the belt, a first group of nozzles 26'' for spraying an aqueous solution of degreasing detergent, and a second group of nozzles 26''' for spraying an aqueous solution of disinfectant (generally sodium hypochlorite).

Washing means completely identical to those described here are also provided at the cheese handling means 19, for washing the lower rotating plate 20'.

According to a preferred aspect of the invention, the control unit not only regulates the distance of the hot sterilization means from the surface of the cheese 9 to be treated, but also controls the rate of ignition of the sterilization means and/or the movement of the first and the second conveyor 2 and 3 and/or the operation of the transfer means 4 and/or the means 19 of handling the cheeses 9 and/or the means of washing the support elements 12, the conveyor belts 3a and 3b, and the rotating plates 20, 20'.

The operation of the equipment according to the invention will now be described, again with reference to Figures 1 and 2.

The cheese 9 is loaded, manually or automatically, from an up-line processing station, the side being rested on the first support element 12 of the conveyor 2. The conveyor 2 advances with a discontinuous motion, so that the cheeses are made to stop at the loading station (a), at a waiting station (b), at a plurality of cooling stations (c) (three cooling stations are shown in Figure 1), at a station (d) for rotating the support through 90°, and at a station for sterilizing the side (f), located down-line from the area (e) of transfer of the cheese from the first to the second conveyor.

Between the said waiting station (b) and the first cooling station (c), the cheese is subjected to hot sterilization of the bases. The time taken by the cheeses to pass through the sterilization stage is in the range from 1 to 5 seconds, preferably from 1.5 to 2.5 seconds, increasing within the range according to the roughness of the surface. The surface of the cheese has to reach a temperature of 70-80°C, but for a sufficiently short time not to cause damage to the cheese.

It has been noted that, of the possible hot sterilization means which can be used, means which generate a flame, such as gas burners, are the most efficient in terms of producing a sharp rise in temperature at the surface of the cheese. The ideal distance at which the flame should be positioned is 15-20 mm. Clearly, however, this distance can vary according to the size of the burners and the temperature of the flame. The distance of the flame from the surface to be treated is therefore chosen in order to heat the surface of the cheese to 70-80°C in the selected period.

The cheese 9 is transferred from the first to the second conveyor by means of the swinging arm 14. The cheese arrives from the station (d) at which the support element 12 rotates through 90° in such a way that the bases of the cheese are made to assume a position orthogonal to the direction of advance, and, on reaching the discharge end of the conveyor, starts to become inclined, following the path of the conveyor 2. At this point, the cheese 9 is picked up by the sliding plate 15 of the swinging arm 14 which, at this moment, is in the raised position, having been rotated through at least 45° with respect to the lowered starting position. Consequently, the surface of one base of the cheese 9 rests on the sliding plate 15 and, at the same moment, the swinging arm 14 starts to descend to return to the lowered starting position, while the conveyor belt 16 makes the cheese 9 advance from the pick-up position, in which the cheese is only partially supported by the conveyor belt 16, to the release position - reached when the sliding plate 15 is in a horizontal position - in which the cheese is deposited by the conveyor belt 16 of the sliding plate 15 on the second conveyor 3. At this point, the cheese 9 reaches the station (f) for the hot sterilization of the side, where the jack 21 raises the rotating plate 20 until it is made to engage with the lower base of the cheese 9 and raise it, bringing it next to the hot sterilization means 18. When the cheese has reached this position, the rotating plate 20 starts to rotate, completing a rotation of 180° in such a way that the whole surface of the side of the cheese can be subjected to the sterilization treatment (if the hot sterilization means are located on only one side of the conveyor 3, the rotating plate 20 rotates through 360°). In this case also, the time for which the cheese remains next to the hot sterilization means is in the range from 1 to 5 seconds, preferably from 1.5 to 2.5 seconds, and the temperature reached by the surface of the cheese rind is 70-80°C. Immediately after the completion of the rotation, the jack 21 lowers the rotating plate 20 in such a way as to remove the cheese 9 from the hot sterilization means 18 and to return it to the conveyor belts 3a and 3b, so that the cheese runs from the station (f) along the conveyor 3 to the position where the cheese is discharged from the equipment 1. Along this path, the cheese is cooled until the starting temperature is reached.

As soon as it is released from the cheese 9, the rotating plate 20 is made to rotate about the pivot point 24 so that it is brought to the diametrically opposite position, while the rotating plate 20' is brought to the upper position where it waits to receive the next cheese. Thus the rotating plate 20 is subjected to the stage of washing by the washing means provided at this position.

Similarly, the support elements 12 and the conveyor belts 3a and 3b, having handled the cheeses and having been brought to the lower area of the equipment 1, are cleaned and washed by the washing means 25', 25", 25"' and 26', 26", 26''' described above.

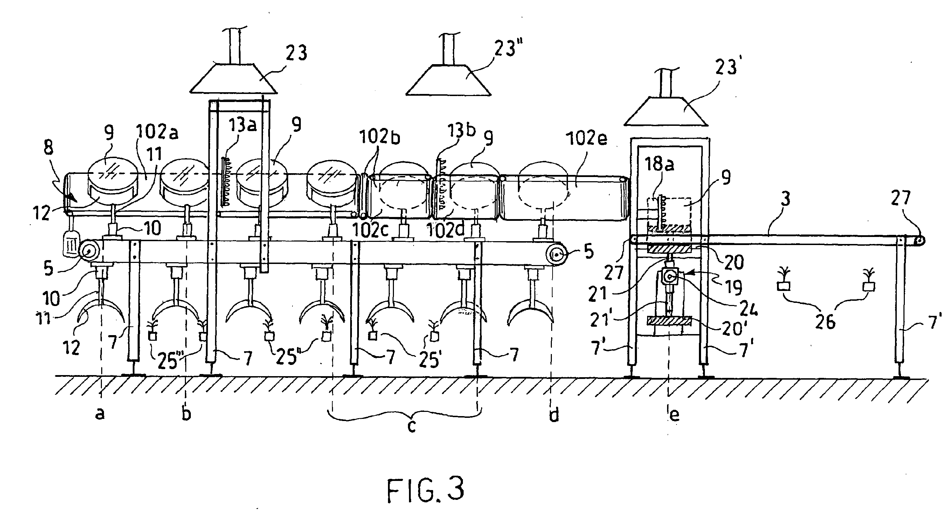

A second embodiment of the equipment according to the present invention will now be described with reference to Figures 3 and 4. In the following description, identical numbers have been assigned to elements corresponding to the first embodiment described above.

In this case also, the equipment 1 comprises a first conveyor 2 and a second conveyor 3.

The first conveyor 2 is completely identical to that described above, and comprises a plurality of support means 8 for the cheeses 9, each comprising a base 10, a stem 11 and a support element 12. By contrast with the first embodiment, in this case the stem 11 and the support element 12 integral with it are not rotatable, but can swing in a lateral direction with respect to the direction of advance of the conveyor 2, being inclined at an angle of up to approximately 45° to the vertical.

The support means 8 also comprise five conveyor belts 102a, 102b, 102c, 102d and 102e.

The first conveyor belt 102a is located on one side of the conveyor 2 and is inclined to the vertical at an angle substantially equal to the lateral inclination which the support element 12 of the cheese 9 can assume by swinging, in such a way that, when the cheese 9 is located above a support element 12, a base of the cheese rests on the first conveyor belt 102a which thus laterally supports and accompanies the cheese in transit on the conveyor 2, while the side of the cheese is supported by the support element 12.

The second conveyor belt 102b is located in series with the first belt 102a and faces the third conveyor belt 102c located on the other side of the conveyor 2. The second conveyor 102b has the same inclination as the first belt 102a and is connected for operation to an actuator (not shown) which enables it to swing in synchronization with the support means 8, in order to follow the transverse movement of the cheese 9 from the said second conveyor belt 102b to the said third conveyor belt 102c, on which the other base of the cheese is placed. This third conveyor belt 102c has, in absolute terms, the same inclination with respect to the vertical as the two preceding belts, but with the opposite sign.

The fourth conveyor belt 102d and the fifth conveyor belt 102e are located in series with the third belt 102c and have the same inclination with respect to the vertical. The fifth belt 102e is connected for operation to an actuator (not shown) which enables it to swing transversely until it assumes a horizontal position in which it faces the conveyor 2.

Hot sterilization means 13a and 13b are located in suitable intermediate positions along the conveyor 2. In this case also, the said hot sterilization means preferably consist of flame generation means, for example linear burners of a known type, formed by a plurality of gas nozzles positioned in such a way that the first means 13a face the first base of the cheese 9 (when the cheese is located on the first conveyor 102a) and the second sterilization means 13b face the second base of the cheese 9 (when the cheese is located on the third and fourth conveyor 102c and 102d), in such a way that they cover the whole area of the bases. The hot sterilization means 13a and 13b are positioned slidably on corresponding sliders (not shown in the figures), with a sliding axis perpendicular to the plane in which the bases of the cheeses lie (these being inclined with respect to the vertical in this embodiment). It is thus possible to position the flames of the burners at a suitable distance from the surfaces of the cheese 9, this distance varying according to the shape, dimensions and type of the cheese, and, for each type of cheese, according to the irregularities of shape and size between one cheese and the next. The distance of the hot sterilization means 13a and 13b from the surface of the cheese can also be regulated automatically by means of suitable sensors, preferably laser sensors, which measure the dimensions of the cheese, or the deviation of the thickness of the cheese from a pre-set standard, and send the signal to a control unit which sends an operating command to an actuator connected to the said hot sterilization means 13a and 13b, thus moving them along the slider until they are positioned at the predetermined distance from the surface of the cheese.

The second conveyor 3 is located down-line from the said fifth conveyor 102e of the first conveyor 2, in such a way that the second conveyor 3 lies on an axis which is parallel to the first conveyor 2 but staggered with respect to it. The second conveyor 3 comprises a first pair of parallel conveyor belts 3a and 3b, spaced apart by a distance less than the diameter of the cheese 9. Thus the cheese 9 leaving the belt 102e is engaged with the conveyor belts 3a and 3b of the second conveyor 3.

Immediately down-line from the point where the cheeses 9 are picked up by the conveyor 3, there is a station for hot sterilization of the sides of the cheeses 9. This station comprises means 18a for hot sterilizing the cheese 9 and means 19 for handling it. A third conveyor belt 3c is located in an intermediate position with respect to the belts 3a and 3b, but is shorter, beginning immediately down-line from the means 19 of handling the cheeses 9.

The conveyor belts 3a, 3b and 3c are of a conventional type and comprise a system of sprockets 27 engaged with a chain which moves the belts. Suitable drive means 17 are connected by means of a shaft to a transmission element of the sprocket 27 located at one end of the conveyor. Suitable support means 7', which are legs in this example, keep the conveyor 3 raised above the ground.

The hot sterilization means are completely identical to the means 13a and 13b described above for sterilizing the bases of the cheeses. They therefore comprise flame generation means, for example linear gas burners which are located, as shown in Figure 4, on one side, or, on both sides of the conveyor 3, and are slidable on suitable sliders transversely with respect to the direction of advance of the belt. In this case also, the optimal distance of the flame from the surface of the side of the cheese can be automatically regulated by means of sensors, preferably laser sensors, which determine the radial dimensions of the cheese or the deviation of these dimensions from a pre-set standard, and send the signal to the control unit which sends an operating command to an actuator connected to the said hot sterilization means 18a, thus moving them along the slider until they reach the predetermined distance from the surface of the side of the cheese.

The means 19 of handling the cheese 9 comprise a rotating plate 20 supported by a jack 21. An independent actuator 22 raises the jack, and consequently the plate 20, in a vertical direction, and a second actuator rotates the plate 20 in a predetermined direction. In a diametrically opposite position there is a second rotating plate 20' connected to a jack 21' and operating in a completely identical way to the first plate. The two rotating plates 20 and 20' are located along the same shaft and are swung about a common pivot point 24 by means of a suitable actuator.

As shown in Figure 4, the plate 20 has a diameter which is less than the distance between the two conveyor belts 3a and 3b, so that, when it is raised by the jack 21, there is no interference between the rotating plate 20 and the belts.

Above the hot sterilization areas of both the first and the second conveyor 2 and 3, there are hoods 23, 23' and 23'', preferably suction hoods, which remove the combustion fumes and gases generated by the burners.

Means of washing the cheese support elements 12 and means of washing the belts 3a, 3b and 3c are provided in the area beneath the two conveyors 2 and 3. Washing means identical to the last-mentioned are also provided for cleaning the belts 102a, 102b, 102c, 102d and 102e of the first conveyor 2.

Since these washing means are wholly identical to those described for the first embodiment of the equipment according to the invention, reference should be made to the preceding description to aid understanding.

Washing means completely identical to those described here are also provided at the cheese handling means 19, for washing the lower rotating plate 20'.

In this second embodiment also, the control unit preferably not only regulates the distance of the hot sterilization means from the surface of the cheese 9 to be treated, but also controls the rate of ignition of the sterilization means and/or the movement of the first and the second conveyor 2 and 3 and/or the means 19 of handling the cheeses 9 and/or the means of washing the support elements 12, the conveyor belts 3a and 3b, and the rotating plates 20, 20'.

The operation of the equipment according to the invention will now be described, again with reference to Figures 3 and 4.

The cheese 9 is loaded, manually or automatically, from an up-line processing station onto the first support element 12 of the conveyor 2. This support element 12 is inclined in such a way that one of the bases of the cheese rests on the conveyor belt 102a. The conveyor 2 and the conveyor belt 102a advance in a synchronized way with a discontinuous motion, causing the cheeses to stop at the loading station (a), at a waiting station (b), at a plurality of cooling stations (c) (three cooling stations are shown in Figure 3) and at a station for sterilizing the side of the cheese (e), located down-line from the area (d) in which the cheese is transferred from the first to the second conveyor.

Between the said waiting station (b) and the first cooling station (c), the cheese is subjected to hot sterilization of the bases. In this case also, the time taken by the cheeses to pass through the sterilization stage is, in the range from 1 to 5 seconds, preferably from 1.5 to 2.5 seconds, increasing within the range according to the roughness of the surface. The surface of the cheese has to reach a temperature of 70-80°C, but for a sufficiently short time not to cause damage to the cheese. The ideal distance at which the flame should be positioned is 15-20 mm. Clearly, however, this distance can vary according to the size of the burners and the temperature of the flame. The distance of the flame from the surface to be treated is therefore chosen in order to heat the surface of the cheese to 70-80°C in the selected period.

In the second of the three cooling areas (c) provided in this case, the cheese 9 is tipped from the second lateral conveyor belt 102b onto the third conveyor belt 102c located on the opposite side of the conveyor 2. Thus the base of the cheese which has already undergone the sterilization treatment is placed on the said third belt 102c, while the untreated base is made available for sterilization.

The hot sterilization of the second base of the cheese 9 is carried out by the hot sterilization means 13b during the transition from the second to the third cooling area (c), according to the rates and process mentioned above for the treatment of the first base.

After the third cooling area (c), the cheese is carried, by the fourth conveyor belt 102d and the fifth conveyor belt 102e, to the transfer area (d). The fifth conveyor belt 102e swings at this point, thus disengaging the side of the cheese from the corresponding support element 12, until it reaches the horizontal position along the directing line of the second conveyor belt 3, and moves the cheese forward until it is made to engage with the conveyor belts 3a and 3b.

At this point, the cheese 9 reaches the station (e) for hot sterilization of the side, where the jack 21 raises the rotating plate 20 until it is made to engage with the lower base of the cheese 9 and to raise it, thus bringing it up to the hot sterilization means 18a. When the cheese has reached this position, the rotating plate 20 starts to rotate, completing a rotation of 360° so that the whole surface of the side can be subjected to the sterilization treatment. In this case also, the time for which the cheese remains next to the hot sterilization means is in the range from 1 to 5 seconds, preferably from 1.5 to 2.5 seconds, and the temperature reached by the surface of the cheese rind is 70-80°C. Immediately after the completion of the rotation, the jack 21 lowers the rotating plate 20 in such a way as to remove the cheese 9 from the hot sterilization means 18a and to return it to the conveyor belts 3a and 3b, and, immediately down-line from these, to the intermediate belt 3c, so that the cheese runs from the station (e) along the conveyor 3 to the position where the cheese is discharged from the equipment 1. Along this path, the cheese is cooled until the starting temperature is reached.

As soon as it is released from the cheese 9, the rotating plate 20 is made to rotate about the pivot point 24 so that it is brought to the diametrically opposite position, while the rotating plate 20' is brought to the upper position where it waits to receive the next cheese. Thus the rotating plate 20 is subjected to the stage of washing by the washing means provided at this position.

Similarly, the support elements 12 and the conveyor belts 102a, 102b, 102c, 102d, 102e, 3a, 3b and 3c, having handled the cheeses and having been brought to the lower area of the equipment 1, are cleaned and washed by the washing means 25', 25'', 25''' and 26', 26'', 26''' described above.

From the preceding description it will immediately be clear that the process according to the invention and the equipment specifically designed for its application resolve the problems addressed at the outset.

This is because the heat treatment described here makes it possible to obtain efficient surface sterilization of the cheese, eliminating every harmful micro-organism which may be present, without adversely affecting the organoleptic characteristics of the cheese. The heat applied to the surface of the cheese is intense but of short duration, which prevents damage to the surface.

The process is of short duration and therefore enables the output of the system to be considerable.

The process according to the invention does not use potentially toxic chemical agents and is therefore considered to be a completely ecologically acceptable treatment. The equipment makes use of suitable hoods 23, 23', 23'' for fume suction, making the production environment absolutely safe.

The equipment described above can be easily adapted to cheeses of various types and sizes and also to pieces or slices of cheese, by varying the type of support elements 12.

The provision of washing means for all parts coming into contact with the cheese ensures that the treatment is as hygienic as possible.

Clearly, only some particular embodiments of the process and equipment for hot sterilization of cheese to which the present invention relates have been described here, but a person skilled in the art will be able to make any necessary modifications to the invention to adapt it to particular applications, without departing from the scope of protection of the present invention.

For example, the hot sterilization means can be of various types, such as hot-air means or incandescent means, for example electrical resistors.

The stages of cooling the cheeses can also advantageously be carried out by circulation of cold air. Thus it is possible to reduce further the periods for which the cheeses remain at the individual stations.

It is also possible to implement a continuous process, without the specified stops at the loading, waiting and cooling stations. Alternatively, stops can be provided at the hot sterilization means.

The number and shape of the support elements can be varied at will, according to the type of cheese to be treated.

## Claims

1. Process for surface sterilization of dairy products, the said process comprising a stage of hot sterilization of the surface or part of the surface of the said dairy product.

2. Process according to Claim 1, in which the said hot sterilization stage comprises the movement of the said dairy product past hot sterilization means (13; 13a, 13b; 18; 18a) or its stopping next to these means.

3. Process according to Claim 2, in which the said hot sterilization means (13; 13a, 13b; 18; 18a) are flame generation means.

4. Process according to Claim 3, in which the said flame generation means are gas burners.

5. Process according to any one of Claims 1 to 4, in which the time of the transit of the said dairy product past the said hot sterilization means is in the range from 1 to 5 seconds, and preferably from 1.5 to 2.5 seconds.

6. Process according to any one of Claims 1 to 5, in which the surface of the said dairy product is subjected to a temperature in the range from 70°C to 80°C.

7. Process according to any one of Claims 1 to 6, in which the said dairy product is a cheese (9).

8. Equipment for surface sterilization of dairy products, particularly of cheeses (9), comprising means (2, 3) for moving the said dairy products, **characterized in that** it additionally comprises means (13; 13a, 13b; 18; 18a) for the hot sterilization of surface at the said dairy products.

9. Equipment according to Claim 8, in which the said hot sterilization means (13; 13a, 13b; 18; 18a) are flame generation means.

10. Equipment according to Claim 9, in which the said flame generation means are gas burners.

11. Equipment according to any one of Claims 8 to 10, in which the said means of moving the cheeses (9) comprise a first conveyor (2), a second conveyor (3) and means (4) of transferring the cheeses from the said first conveyor to the said second conveyor.

12. Equipment according to Claim 11, in which the said first conveyor (2) is movably associated with a plurality of support means (8) for the said cheeses (9) located at regular intervals along it, the said support means (8) comprising a base (10), a stem (11) rotatably engaged with the said base and a support element (12) fixed to the said stem, in which the said stem (11) associated with the said support element (12) can rotate through 90°, to make the said cheese (9) assume a position in which the base of the cheese is orthogonal to the direction of movement of the conveyor (2).

13. Equipment according to Claim 12, in which the said support element (12) is saddle-shaped and has a width less than that of the side of the cheese (9).

14. Equipment according to Claim 12 or 13, in which the said means (8) of supporting the cheeses (9) are interchangeable.

15. Equipment according to any one of Claims 8 to 14, in which the said hot sterilization means (13; 13a, 13b) of the said first conveyor (2) are associated with means of regulating their distance from the surface of the said cheese (9).

16. Equipment according to Claim 15, in which the said means of regulating the distance from the surface of the cheese comprise a slider with its sliding axis perpendicular to the plane in which the bases of the cheeses lie, with which slider the said hot sterilization means are slidably engaged, and sensors, preferably laser sensors, which determine the dimensions of the cheese, or the deviation of the thickness of the cheese from a pre-set standard, and send the signal to a control unit which sends an operating command to an actuator connected to the said hot sterilization means (13; 13a, 13b) in such a way as to move them along the slider until they are positioned at the predetermined distance from the surface of the cheese.

17. Equipment according to any one of Claims 8 to 16, in which the said means (4) of transferring the cheeses (9) from the said first (2) to the said second conveyor (3) comprise a swinging arm (14) which can swing in the vertical plane lying on the directing line of advance of the conveyor (2), the said swinging arm (14) comprising, at the opposite end from the pivot point, a sliding plate (15) for receiving the cheese in transit from the first to the second conveyor, the said sliding plate (15), in turn, comprising a conveyor belt (16).

18. Equipment according to any one of Claims 8 to 17, in which the said second conveyor (3) comprises a pair of parallel conveyor belts (3a, 3b), spaced apart by a distance which is less than the diameter of the cheese (9), the said second conveyor (3) being positioned in such a way that the feed end of the sliding plate (15) terminates between the two belts (3a, 3b), the said second conveyor (3) being associated with a station for the hot sterilization of the sides of the cheeses (9), the said hot sterilization station for the sides comprising hot sterilization means (18; 18a) and means (19) of handling the cheeses (9).

19. Equipment according to Claim 18, in which the said hot sterilization means (18; 18a) are associated with means of regulating the distance from the surface of the said cheese (9).

20. Equipment according to Claim 19, in which the said means of regulating the distance of the said hot sterilization means (18; 18a) from the surface of the cheese comprise sliders which are transverse with respect to the direction of advance of the belt on which the said hot sterilization means are slidably engaged, and sensors, preferably laser sensors, which determine the radial dimensions of the cheese or the deviation of these dimensions from a pre-set standard, and send the signal to a control unit which sends an operating command to an actuator connected to the said hot sterilization means (18; 18a), thus moving them along the slider until they are placed at the predetermined distance from the surface of the side of the cheese.

21. Equipment according to any one of Claims 8 to 20, in which the said means (19) of handling the cheese (9) comprise a first rotating plate (20) supported by a jack (21) and a second rotating plate (20') connected to a second jack (21'), the said rotating plates (20, 20') being placed on the same shaft and being swingable about a common pivot point (24).

22. Equipment according to any one of Claims 8 to 10, comprising a first conveyor (2) and a second conveyor (3), the said first conveyor (2) being movably associated with a plurality of support means (8) for a cheese (9), the said support means (8) comprising a base (10), a stem (11) and a support element (12) integral with the said stem, the said stem and the said support element swinging in a transverse direction with respect to the direction of advance of the conveyor (2) and being such that they can support the side of the said cheese (9).

23. Equipment according to Claim 22, in which the said support means (8) additionally comprise a plurality of conveyor belts (102a, 102b, 102c, 102d and 102e) located in sequence laterally and in an inclined position with respect to the conveyor (2) and being such that they support a base of the said cheese (9) and accompany the movement of the said cheese along the said first conveyor (2).

24. Equipment according to Claim 23, in which two conveyor belts (102b, 102c), different from the first and the last of the series of the said conveyor belts (102a, 102b, 102c, 102d, 102e), face each other on two opposite sides of the said first conveyor (2), the conveyor belt (102b) located on the same side as the first belt of the series being swingable in synchronization with the support means (8), in order to accompany the transverse movement of the cheese (9) from the said conveyor belt (102b) to the conveyor belt (102c) facing it.

25. Equipment according to Claim 23 or 24, in which the last conveyor belt (102e) of the series of the said belts (102a, 102b, 102c, 102d, 102e) is swingable transversely until it assumes a horizontal position side by side to the said first conveyor (2) and on the directing line of the said second conveyor (3), in such a way as to enable the cheeses (9) to be transferred from the said first conveyor (2) to the said second conveyor (3).

26. Equipment according to any one of Claims 22 to 25, additionally comprising the characteristics of any one of Claims 18-21 and/or of any one of Claims 15-16.

27. Equipment according to Claim 26, in which the said second conveyor (3) additionally comprises a third conveyor belt (3c), parallel to the said belts (3a, 3b) and intermediate with respect to them, located immediately down-line from the said means (19) of handling the said cheese (9).

28. Equipment according to any one of Claims 8 to 27, the said hot sterilization means (13; 13a, 13b; 18; 18a) being associated with hoods (23, 23', 23''), preferably suction hoods, for removing combustion fumes and gases.

29. Equipment according to any one of Claims 8 to 28, the said equipment additionally comprising means (25', 25'', 25''') of washing the cheese support elements (12) and the rotating plates (20, 20') and means (26', 26'', 26''') of washing the conveyor belts (3a, 3b, 3c, 102a, 102b, 102c, 102d, 102e).

30. Equipment according to Claim 29, in which the said means of washing the cheese support elements (12) and the rotating plates (20, 20') comprise a first group of one or more nozzles (25') for spraying an aqueous solution of a degreasing detergent, a second group of one or more nozzles (25'') for spraying an aqueous solution of a disinfectant, and air drying means (25''').

31. Equipment according to Claim 29 or 30, in which the said means of washing the conveyor belts (3a, 3b, 3c, 102a, 102b, 102c, 102d, 102e) comprise one or more scrapers (26') of the surface of the said belts, a first group of nozzles (26'') for spraying an aqueous solution of degreasing detergent and a second group of nozzles (26''') for spraying an aqueous solution of disinfectant.

32. Equipment according to any one of Claims 8 to 31, the said equipment additionally comprising a control unit which carries out at least the function of regulating the distance of the hot sterilization means from the surface of the cheese (9) to be treated and/or the ignition time of the sterilization means and/or the movement of the first and the second conveyor (2, 3) and of the conveyor belts (3a, 3b, 3c, 102a, 102b, 102c, 102d, 102e) associated with them and/or the operation of the means of transfer (4) and/or the means of handling (19) the cheeses (9) and/or of the means of washing the support elements (12), the conveyor belts (3a, 3b, 3c, 102a, 102b, 102c, 102d, 102e) and the rotating plates (20, 20').

33. Dairy product having a sterile surface which can be obtained by the process according to any one of Claims 1 to 7.
